# FASCICULE DE BREVET EUROPEEN

(11) **EP 4 463 624 B1**
(45) Date de publication et mention de la délivrance du brevet: **08.10.2025**
(21) Numéro de dépôt: 23703628.0
(22) Date de dépôt: 06.01.2023
(51) Int. Cl.: F02K 1/72

(54) **INVERSEUR DE POUSSEE COMPRENANT DES GRILLES FIXES ET UNE MEMBRANE D'OBTURATION**
SCHUBUMKEHRVORRICHTUNG MIT FESTEN KASKADEN UND EINER DICHTUNGSMEMBRAN
THRUST REVERSER COMPRISING FIXED CASCADES AND A SEALING MEMBRANE

(30) Priorité: 10.01.2022 FR 2200134
(43) Date de publication de la demande: 20.11.2024
(73) Titulaire: Safran Nacelles, 76700 Gonfreville-l'Orcher (FR)
(72) Inventeur: GONIDEC, Patrick, 77550 MOISSY-CRAMAYEL (FR); CHAPELAIN, Loïc, Décédé (FR); BOILEAU, Patrick André, 77550 MOISSY-CRAMAYEL (FR)
(74) Mandataire: Brevalex
(86) Numéro de dépôt international: PCT/FR2023/050014
(87) Numéro de publication internationale: WO 2023/131761

(56) Documents cités:
- FR-A1- 2 981 989
- FR-A1- 3 076 864
- FR-A1- 3 087 848
- US-A- 3 302 404

## Description

### Domaine technique

L'invention se rapporte au domaine des nacelles et des inverseurs de poussée pour ensemble propulsif d'aéronef, et, plus particulièrement, aux nacelles équipées d'inverseurs à grilles fixes.

### État de la technique antérieure

Les inverseurs de poussée sont des dispositifs permettant de dévier vers l'avant le flux d'air traversant l'ensemble propulsif, de manière à raccourcir les distances d'atterrissage, et à limiter la sollicitation des freins sur les atterrisseurs.

Les inverseurs à grilles actuellement exploités dans le secteur aéronautique comprennent des grilles de déviation intégrées à une structure fixe de l'inverseur, destinée à être reliée à un carter de turbomachine. Une structure mobile de l'inverseur comporte un ou plusieurs capots d'inverseur, et elle est montée déplaçable en translation par rapport à la structure fixe entre une position avancée de poussée directe, et une position reculée d'inversion de poussée. En position avancée de poussée directe, les grilles de déviation sont agencées dans le logement des capots d'inverseur, et elles sont isolées de la veine secondaire de l'ensemble propulsif par une paroi radialement interne des capots d'inverseur. En revanche, dans la position reculée d'inversion de poussée, la paroi radialement interne reculée des capots d'inverseur définit une ouverture de passage de la veine secondaire vers les grilles de déviation.

Habituellement, pour dévier au moins une partie du flux secondaire vers cette ouverture de passage en direction des grilles, l'inverseur est également équipé de volets d'obturation, qui, lorsqu'ils sont déployés, obturent au moins partiellement la veine secondaire. De manière connue, cela force l'air du flux secondaire à traverser l'ouverture de passage et à rejoindre les grilles, qui génèrent alors le flux d'air de contre-poussée vers l'avant.

Les volets sont généralement montés pivotants sur la paroi radialement interne des capots d'inverseur, cette paroi délimitant la veine secondaire radialement vers l'extérieur. Ainsi, des renfoncements sont prévus dans cette paroi radialement interne des capots d'inverseur afin de recevoir les volets d'obturation en position escamotée, telle qu'adoptée en jet direct. Néanmoins, en jet direct, la présence des renfoncements et des volets est source de perturbations aérodynamiques sur le flux secondaire. De plus, cette présence limite localement l'implantation d'un panneau acoustique sur la paroi radialement interne des capots d'inverseur.

Pour apporter une solution technique à ces problèmes, il a été proposé de remplacer les volets par une ou plusieurs membranes d'obturation. Une telle conception est par exemple connue du document FR 3 076 864 A1.

Cependant, les solutions proposées avec des membranes d'obturation restent perfectibles, notamment en matière de facilité de mise en œuvre et de fiabilité de déploiement, ainsi qu'en matière de préservation de la surface acoustique attachée à la veine secondaire.

### Exposé de l'invention

L'invention a tout d'abord pour objet un inverseur de poussée pour ensemble propulsif d'aéronef, l'inverseur comprenant une structure fixe équipée d'au moins une grille de déviation ainsi que d'une paroi de délimitation radialement interne d'une veine secondaire de l'ensemble propulsif destinée à être traversée par un flux secondaire, l'inverseur comprenant également une structure mobile comprenant au moins un capot d'inverseur présentant un logement ouvert vers l'amont, et délimité entre une paroi radialement externe et une paroi radialement interne du capot d'inverseur, la structure mobile étant déplaçable en translation par rapport à la structure fixe selon un axe central longitudinal de l'inverseur, entre une position avancée de poussée directe et une position reculée d'inversion de poussée, la grille de déviation étant agencée, en position avancée de poussée directe de la structure mobile, dans le logement du capot d'inverseur en étant isolée de la veine secondaire par la paroi radialement interne du capot d'inverseur, et, dans la position reculée d'inversion de poussée de la structure mobile, la paroi radialement interne reculée du capot d'inverseur laissant apparaître en amont une ouverture de passage de la veine secondaire vers la grille de déviation, l'inverseur de poussée comprenant également au moins une membrane d'obturation conçue pour dévier au moins une partie du flux secondaire vers l'ouverture de passage et la grille de déviation, lorsque la structure mobile se trouve en position reculée d'inversion de poussée.

Selon l'invention, l'inverseur comprend des premiers moyens d'accrochage reliant une première extrémité de la membrane d'obturation à un cadre arrière de support de la grille de déviation ou à la paroi radialement externe du capot d'inverseur, ainsi que des seconds moyens d'accrochage reliant une seconde extrémité de la membrane d'obturation à la paroi de délimitation radialement interne de la veine secondaire, au moins une partie de la membrane d'obturation se trouvant agencée entre la grille de déviation et la paroi radialement interne du capot d'inverseur lorsque la structure mobile occupe sa position avancée de poussée directe, et la membrane d'obturation se trouvant en partie en appui contre une extrémité amont de la paroi radialement interne du capot d'inverseur ou en amont et à distance de cette extrémité amont, lorsque la structure mobile occupe sa position reculée d'inversion de poussée.

L'inverseur selon l'invention intègre une ou plusieurs membranes d'obturation, qui confèrent des performances aérodynamiques et acoustiques améliorées à l'ensemble propulsif équipé d'un tel inverseur. En effet, en jet direct, la toile est logée dans la cavité du capot coulissant, ce qui permet de disposer d'une veine secondaire externe pratiquement ou intégralement exempte de toute singularité géométrique parasite pour la traînée, et délétère pour le traitement acoustique.

En outre, la conception spécifique à l'invention offre une simplicité de mise en œuvre de la membrane d'obturation lors du déplacement de la structure mobile vers sa position reculée d'inversion de poussée. Elle offre également une grande fiabilité de déploiement de cette membrane, que celle-ci soit rattachée au cadre arrière de support de grille ou à la paroi radialement externe du capot d'inverseur. A cet égard, il est noté que la membrane d'obturation, tenue entre les moyens d'accrochage, prend appui sur l'extrémité amont de la paroi radialement interne du capot d'inverseur formant préférentiellement un panneau acoustique, au moins pendant une partie du déplacement du capot coulissant vers l'arrière. Cet appui vient tendre la membrane, assimilable à une toile.

L'invention prévoit de préférence au moins l'une des caractéristiques techniques optionnelles suivantes, prises isolément ou en combinaison.

De préférence, les seconds moyens d'accrochage comprennent des câbles.

De préférence, les seconds moyens d'accrochage comprennent des bielles dont une première extrémité de chacune d'elles est montée sur la paroi de délimitation radialement interne de la veine secondaire, de préférence par l'intermédiaire d'une liaison pivot ou d'une liaison rotule. Ces bielles permettent de renforcer encore davantage la fiabilité de déploiement de la membrane d'obturation, en évitant notamment qu'elle reste plaquée à l'intérieur du logement dans le capot d'inverseur.

De préférence, chaque bielle est conçue pour se déplacer d'une position en saillie dans la veine secondaire, adoptée lorsque la structure mobile occupe sa position avancée de poussée directe, à une position rabattue vers l'aval, adoptée lorsque la structure mobile occupe sa position reculée d'inversion de poussée, et, de plus, des moyens élastiques de poussent chaque bielle vers sa position rabattue.

De préférence, les câbles précités coopèrent avec les bielles, chaque câble étant fixé à une seconde extrémité de l'une des bielles associée à ce câble, ou traversant cette bielle associée pour être fixé sur la paroi de délimitation radialement interne de la veine secondaire.

De préférence, les premiers moyens d'accrochage comprennent une pluralité de boutons solidaires de la première extrémité de la membrane d'obturation, ainsi que des boutonnières réalisées dans le cadre arrière de support de la grille de déviation, un clip élastique de sécurité étant préférentiellement associé à chaque bouton pour sécuriser la position du bouton dans la boutonnière. Bien entendu, une conception inversée est également possible, avec les boutons portés par le cadre arrière de support de la grille de déviation, sans sortir du cadre de l'invention.

De préférence, chaque boutonnière est une fente en forme générale de T.

De préférence, les boutons sont solidarisés à la première extrémité de la membrane d'obturation via un câble d'armature circonférentiel fixé sur cette première extrémité de la membrane, ou via des câbles d'armature radiaux fixés sur la membrane d'obturation, ou encore via des pattes fixées sur la première extrémité de la membrane. Dans le second cas, les câbles radiaux sont de préférence les mêmes que ceux des seconds moyens d'accrochage décrits précédemment.

Dans une autre réalisation, les premiers moyens d'accrochage comprennent une tôle fixée sur le cadre arrière de support de la grille de déviation, et enserrant la première extrémité de la membrane d'obturation entre ce cadre de support et la tôle.

De préférence, lorsque la structure mobile adopte sa position avancée de poussée directe, la seconde extrémité de la membrane d'obturation est pincée entre l'extrémité amont de la paroi radialement interne du capot d'inverseur, et un bord de déviation appartenant à la structure fixe de l'inverseur.

L'ensemble des caractéristiques décrites ci-dessus s'appliquent aussi bien aux inverseurs comportant une unique membrane, qu'aux inverseurs équipés de plusieurs membranes d'obturation propres à l'invention, agencées de manière adjacente selon une direction circonférentielle de l'inverseur.

Selon une première possibilité évoquée ci-dessus, les premiers moyens d'accrochage relient la première extrémité de la membrane d'obturation au cadre arrière de support de grille. Selon une alternative, les premiers moyens d'accrochage relient la première extrémité de la membrane d'obturation à la paroi radialement externe du capot d'inverseur, de préférence à une extrémité amont celle-ci. Dans ce cas de figure, la membrane d'obturation se trouve également en partie en appui contre une extrémité aval du cadre arrière de support de la grille de déviation, ou en aval et à distance de cette extrémité aval, lorsque la structure mobile occupe sa position reculée d'inversion de poussée. Dans cette alternative, la membrane d'obturation se trouve avantageusement repliée en deux de part et d'autre des grilles, en configuration de poussée directe.

L'invention a également pour objet une nacelle pour ensemble propulsif d'aéronef, comprenant au moins un capot de soufflante, ainsi qu'un inverseur de poussée tel que décrit ci-dessus.

Enfin, l'invention a également pour objet un ensemble propulsif pour aéronef, comprenant une turbomachine et une telle nacelle.

D'autres avantages et caractéristiques de l'invention apparaîtront dans la description détaillée non limitative ci-dessous.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur de poussée représenté en configuration de poussée directe ;
[Fig. 2] est une demi-vue schématique en coupe longitudinale de l'inverseur équipant l'ensemble propulsif montré sur la figure 1, avec l'inverseur représenté en configuration de poussée directe ;
[Fig. 3] est une demi-vue schématique de l'inverseur montré sur la figure 2, représenté en configuration d'inversion de poussée ;
[Fig. 3A] est une demi-vue schématique similaire à celle de la figure précédente, avec l'inverseur se présentant selon une forme alternative de réalisation ;
[Fig. 4] est une vue en perspective de l'inverseur montré sur les figures 2 et 3, représenté en configuration de poussée directe ;
[Fig. 5] est une vue en perspective de l'inverseur montré sur la figure 4, représenté en configuration d'inversion de poussée ;
[Fig. 6] est une vue schématique de l'une des bielles de raccordement de la membrane d'obturation de l'inverseur montré sur les figures précédentes, avec la bielle montrée dans une position en saillie telle qu'adoptée en configuration de poussée directe de l'inverseur ;
[Fig. 7] est une vue schématique de la bielle de raccordement montrée sur la figure 6, représentée dans une position rabattue telle qu'adoptée en configuration d'inversion de poussée de l'inverseur ;
[Fig. 8] est une vue en perspective de la bielle de raccordement montrée sur les figures 6 et 7, dans sa position en saillie ;
[Fig. 9] est une vue en perspective des premiers moyens d'accrochage de la membrane d'obturation du système d'inverseur, selon un mode de réalisation préféré de l'invention ;
[Fig. 10] est une vue en perspective similaire à celle de la figure précédente, selon un autre angle de vue, montrant les premiers moyens d'accrochage de la membrane d'obturation ;
[Fig. 11] est une vue en perspective similaire à celle de la figure 9, avec les premiers moyens d'accrochage de la membrane d'obturation se présentant selon une forme différente ;
[Fig. 12] est une vue schématique en coupe montrant les premiers moyens d'accrochage de la membrane d'obturation, selon encore une autre forme de réalisation ;
[Fig. 13] est une vue radiale de l'extérieur montrant les moyens d'accrochage de la figure précédente ;
[Fig. 14] est une vue schématique en coupe similaire à celle de la figure 12, avec les premiers moyens d'accrochage de la membrane d'obturation se présentant selon encore une autre forme.
[Fig. 15] est une demi-vue schématique similaire à celle de la figure 2, avec l'inverseur se présentant selon un autre mode de réalisation préféré de l'invention, et étant représenté en configuration de poussée directe ;
[Fig. 16] est une demi-vue schématique similaire à celle de la figure précédente, avec l'inverseur représenté en configuration d'inversion de poussée.

### Description détaillée de modes de réalisation

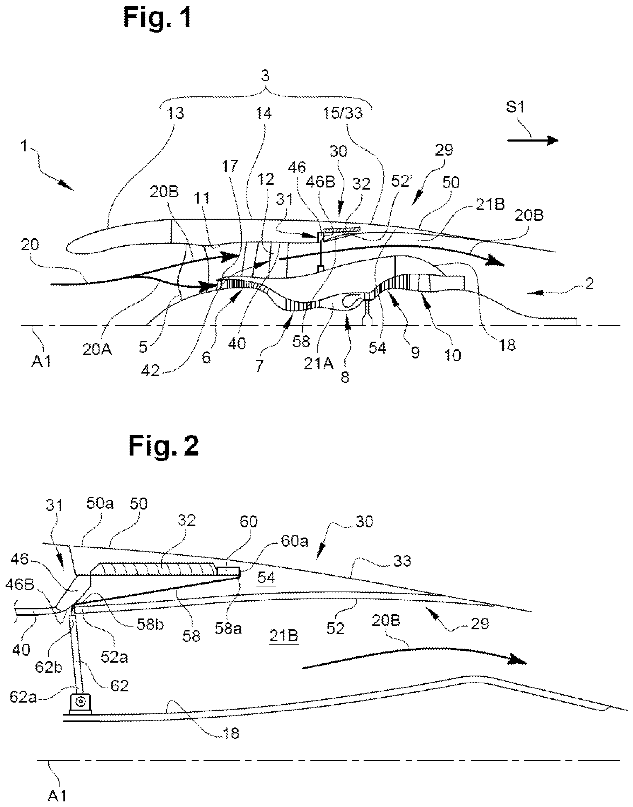

Il est représenté sur la figure 1 un ensemble propulsif 1 d'aéronef, présentant un axe central longitudinal A1.

Par la suite, les termes « amont » et « aval » sont définis relativement à un sens général S1 d'écoulement des gaz à travers l'ensemble propulsif 1, le long de l'axe A1 lorsque celui-ci génère une poussée. Ces termes « amont » et « aval » pourraient respectivement être substitués par les termes « avant » et « arrière », avec la même signification.

L'ensemble propulsif 1 comprend une turbomachine 2, une nacelle 3 ainsi qu'un mât (non représenté), destiné à relier l'ensemble propulsif 1 à une aile (non représentée) de l'aéronef.

La turbomachine 2 est dans cet exemple un turboréacteur à double flux et à double corps comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz. Le turboréacteur 2 est doté d'un carter de soufflante 11 relié au générateur de gaz par des bras structuraux 12.

La nacelle 3 comprend une section avant formant une entrée d'air 13, une section médiane qui comporte deux capots de soufflante 14 enveloppant le carter de soufflante 11, et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz. La veine secondaire 21B est délimitée radialement vers l'intérieur par un carénage interne fixe qui enveloppe le générateur de gaz. Dans cet exemple, le carénage interne fixe comprend un premier tronçon 17 appartenant à la section médiane 14, et un deuxième tronçon 18 s'étendant vers l'arrière à partir du premier tronçon 17, de manière à former une partie de la section arrière 15.

Ce second tronçon 18 fait partie intégrante d'une structure fixe d'un inverseur de poussée qui sera décrit ci-après. Ce même tronçon sera par la suite dénommé paroi 18 de délimitation radialement interne de la veine secondaire 21B.

Radialement vers l'extérieur, la veine secondaire 21B est délimitée par le carter de soufflante 11, et, dans la configuration de la figure 1, par un ou plusieurs capots mobiles d'inverseur 33 formant une partie de la section arrière 15 de la nacelle 3, et qui seront décrits ultérieurement. Plus précisément, entre le carter de soufflante 11 et les capots d'inverseur 33, il est prévu une virole extérieure 40 d'un carter intermédiaire 42, ce dernier comprenant les bras structuraux 12 précités, dont l'extrémité radialement externe est fixée sur cette virole 40. Celle-ci participe donc également à délimiter la veine secondaire 21B radialement vers l'extérieur, en étant située dans le prolongement axial aval du carter de soufflante 11.

La nacelle 3 comporte donc un inverseur de poussée 30 centré sur l'axe A1 et comprenant d'une part une structure fixe 31 solidaire du carter de soufflante 11, et d'autre part une structure 29 mobile par rapport à la structure fixe 31. La structure fixe 31 comporte par exemple un cadre avant 46 qui la raccorde fixement au carter de soufflante 11, de préférence via un assemblage en bride couteau situé en aval de la virole extérieure 11. Ce cadre avant 46 contient une partie aérodynamique profilée appelée bord de déviation 46B, qui guide l'écoulement en jet inversé.

La structure fixe comporte aussi une pluralité de grilles de déviation 32 agencées de manière adjacente les unes aux autres autour de l'axe A1, selon une direction circonférentielle de l'inverseur 30 et de l'ensemble propulsif 1. Par ailleurs, la structure mobile 29 comprend quant à elle les capots mobiles d'inverseur 33 précités, par exemple deux capots 33 s'étendant chacun sur une amplitude angulaire d'environ 180°. Cette configuration à deux capots 33 est particulièrement bien adaptée dans le cas d'une conception de nacelle dans laquelle les capots/parois 18 sont également montés articulés, de sorte l'inverseur 30 présentant alors une architecture dite « en D », connue sous l'appellation anglo-saxonne « D-Duct ». Dans cette architecture, les capots 18, 33 sont reliés de manière à s'ouvrir / de fermer simultanément lors des opérations de maintenance sur le moteur. Néanmoins, d'autres architectures sont possibles, comme par exemple une architecture dite « en C », connue sous l'appellation anglo-saxonne « C-Duct », ou encore une architecture dite « en O », connue sous l'appellation anglo-saxonne « O-Duct ».

Chaque capot d'inverseur 33 comporte une paroi radialement externe 50 formant une surface aérodynamique externe de nacelle, ainsi qu'une paroi radialement interne 52 participant à la délimitation de la veine secondaire 21B radialement vers l'extérieur. Cette paroi 52 se situe dans la continuité aval du bord de déviation 46B. Les deux parois 50, 52 définissent un logement 54 ouvert axialement à l'extrémité amont du capot d'inverseur 33.

La figure 1 montre l'inverseur 30 dans une configuration de poussée vers l'avant, dit « jet direct », correspondant à une configuration standard de vol. Dans cette configuration, les capots 33 de la structure mobile 29 sont dans une position de fermeture, dite position avancée de poussée ou de « jet direct », dans laquelle ces capots d'inverseur 33 sont en appui sur la structure fixe 31, en particulier sur le bord de déviation 46B faisant partie intégrante de cette dernière. En effet, dans la configuration de poussée directe, l'extrémité amont 52a de la paroi radialement interne 52 de chaque capot 33 est en appui axial contre le bord de déviation 46B.

La structure mobile 29 est ainsi déplaçable en translation par rapport à la structure fixe 31 selon l'axe A1 de l'inverseur, entre la position avancée de poussée directe montrée sur la figure 1, et une position reculée d'inversion de poussée qui sera décrite ultérieurement. Dans la position avancée de poussée directe de la structure mobile 29, les grilles de déviation 32 sont agencées dans le logement 54 des capots d'inverseur 33, en étant isolées de la veine secondaire 21B par la paroi radialement interne 52 de ces capots coulissant 29 d'inverseur. Cette paroi 52, formant la paroi externe de la veine secondaire, est également appelée panneau interne acoustique.

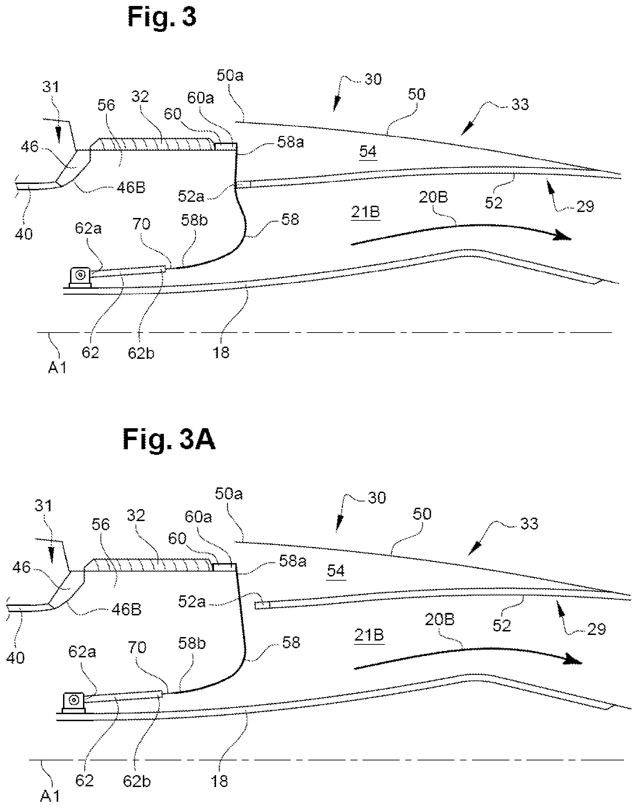

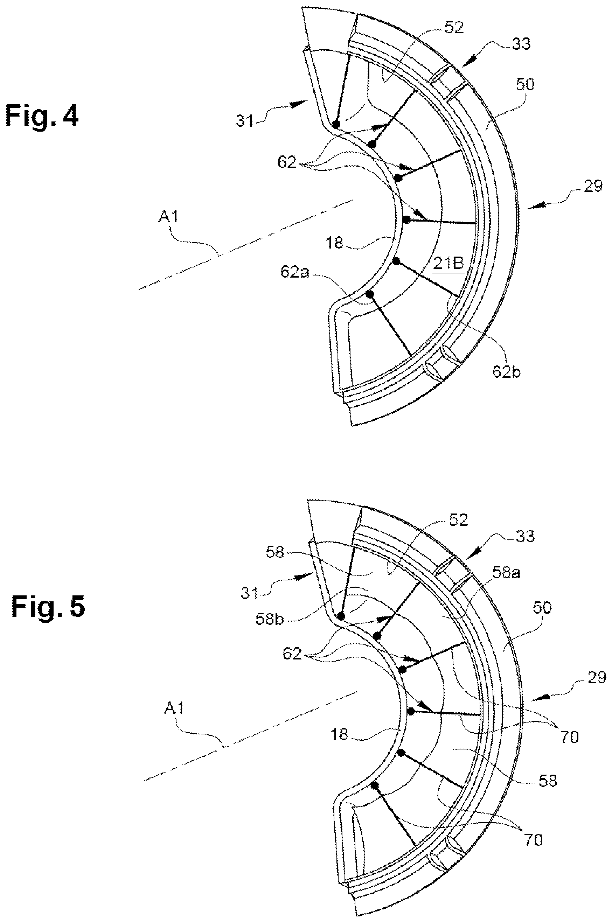

Cette configuration de poussée directe est également représentée sur les figures 2 et 4, tandis que la position reculée d'inversion de poussée de la structure mobile 29 est représentée sur les figures 3 et 5. Sur la figure 3, il est montré que le panneau acoustique interne reculé 52 des capots d'inverseur laisse apparaître en amont une ouverture de passage 56 de la veine secondaire 21B vers les grilles de déviation 32. L'ouverture 56 est donc également délimitée vers l'amont par le bord de déviation 46B, qui s'évase radialement vers l'extérieur en allant vers l'arrière, pour délimiter un écoulement d'air destiné à traverser les grilles 32 lorsque le système mobile se trouve dans cette position reculée d'inversion de poussée. En d'autres termes, le bord de déviation 64 s'éloigne progressivement de l'axe A1 en allant de l'avant vers l'arrière, pour guider / dévier l'air vers les grilles 32 en configuration d'inversion de poussée.

Afin de dévier au moins une partie du flux secondaire 20B vers l'ouverture de passage 56 définie axialement entre le bord de déviation 46B et l'extrémité amont 52a de la paroi radialement interne 52 de chaque capot 33, l'inverseur 30 comporte une ou plusieurs membranes d'obturation 58. Par la suite, il sera décrit une réalisation dans laquelle une seule membrane 58 est associée à chaque capot d'inverseur 33 en présentant une amplitude angulaire identique ou similaire, mais il reste envisageable de prévoir plusieurs membranes circonférentiellement adjacentes associées à chaque capot 33. De même, seule la coopération entre une membrane 58 et son capot associé 33 sera décrite ci-après, étant entendu que cette coopération est identique ou similaire pour tous les capots de l'inverseur 33.

La membrane 58 peut être réalisée dans un matériau connu de l'homme du métier pour ce type d'application. Par exemple, il peut s'agir d'un tissu non imprégné, par exemple de fibres d'aramide. La membrane 58 peut également être réalisée à l'aide d'un matériau composite dont la matrice est particulièrement souple, par exemple en polyuréthane aliphatique, ce qui permet l'utilisation dans des conditions de températures différentes, notamment des températures plus faibles dans le cas d'une membrane en polyuréthane aliphatique que dans le cas d'une membrane en silicone. La matrice donne une faible capacité de reprise en flexion et le comportement de la structure obtenue est bien celui d'une membrane. L'une des propriétés majeures de cette membrane 58 est de pouvoir se plier de manière parfaitement réversible (élastique ou par glissement de fibres) avec un rayon de courbure très faible par rapport à sa surface, et d'avoir une épaisseur très faible, par exemple de l'ordre de 0,1 à 3 mm. A titre informatif, il est observé que cette membrane 58 se comporte comme une voile de bateau ou un parachute / une aile volante quand elle est mise sous pression.

L'une des particularités de l'invention réside dans l'accrochage de la membrane 58 sur l'inverseur 30. Pour ce faire, et toujours en référence aux figures 1 à 5, il est prévu des premiers moyens d'accrochage reliant une première extrémité 58a de la membrane d'obturation 58 à un cadre arrière 60 de support des grilles 32, ce support annulaire ou en forme de tronçon annulaire reliant en effet l'extrémité arrière de plusieurs grilles adjacentes. De plus, des seconds moyens d'accrochage relient une seconde extrémité 58b de la membrane d'obturation 58, opposée à la première membrane 58a, à la paroi 52 de délimitation radialement interne de la veine secondaire. Les premiers et seconds moyens d'accrochage seront décrits ci-après.

En outre, comme cela est visible sur les figures 1, 2 et 4, lorsque la structure mobile 29 occupe sa position avancée de poussée directe, au moins une partie de la membrane d'obturation 58 se trouve agencée radialement entre les grilles de déviation 32 et la paroi radialement interne 52 du capot d'inverseur 33, dans le logement 54. De préférence, la partie de la membrane 58 qui se trouve dans ce logement 54 du capot d'inverseur 33, recouvre radialement l'intégralité de la longueur des grilles 32. De ce fait, lorsque la structure mobile 29 adopte sa position avancée de poussée directe, la seconde extrémité 58b de la membrane 58 est pincée entre l'extrémité amont de la paroi 18, et le bord de déviation 46B. Afin d'éviter d'éventuelles dégradations de la membrane 58 du fait de ce pincement, le bord de déviation 46B peut localement présenter une échancrure de forme adaptée pour recevoir l'extrémité amont 52a de la paroi 52. Ainsi, la membrane 58 se trouve également plaquée dans cette échancrure du bord de déviation 46B, par l'appui de l'extrémité amont de la paroi 52.

Egalement, comme cela est visible sur la figure 3, lorsque la structure mobile 29 se déplace et qu'elle occupe sa position reculée d'inversion de poussée à la fin de ce déplacement, la membrane d'obturation 58 se trouve en partie en appui contre l'extrémité amont 52a de la paroi radialement interne 52 du capot d'inverseur, correspondant donc au panneau acoustique. Plus précisément, au cours du déplacement vers l'arrière de la structure mobile 29, la membrane 58 glisse sur cette l'extrémité amont 52a de la paroi radialement interne 52.

En position reculée d'inversion de poussée de la figure 3, la membrane 58 est donc en appui axial vers l'aval contre l'extrémité amont 52a. Il est à noter que selon l'étendue de la course axiale de l'inverseur, la membrane 58 peut ne plus être en contact avec le panneau interne acoustique 52 dans la position totalement déployée de l'inverseur, où le capot 33 est dans sa position la plus reculée. Une telle configuration est représentée sur la figure 3A, sur laquelle il est bien montré que la membrane 58 se trouve en amont et à distance de l'extrémité amont 52a de la paroi 52 du capot d'inverseur. L'option avec contact correspond à une course minimisée de l'inverseur, tandis que l'option sans contact correspond en général à une forme de membrane plus lisse en jet inversé, donc plus performante d'un point de vue aérodynamique.

Ainsi, la partie de la membrane 58 qui se situe radialement vers l'extérieur par rapport à sa zone d'appui sur la paroi 52 obture une partie de l'ouverture axiale amont du logement 54, tandis que l'autre partie située radialement vers l'intérieur obture au moins une partie de la veine secondaire 21B, déviant de la sorte au moins une partie du flux secondaire 20B vers l'ouverture de passage 56 en direction des grilles 32.

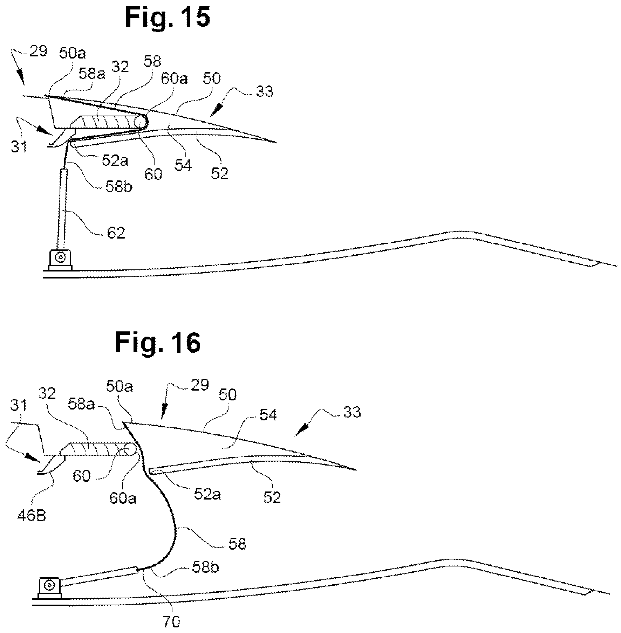

Dans un autre mode de réalisation préféré représenté sur les figures 15 et 16, l'accrochage radialement externe de la membrane 58 peut être effectué sur la paroi radialement externe 50 du capot coulissant 33. Plus précisément, des premiers moyens d'accrochage relient la première extrémité 58a de la membrane à une extrémité amont 50a de la paroi radialement externe 50 du capot 33. Ainsi, comme cela est visible sur la figure 15, en position de poussée directe, la membrane 58 est logée dans le logement 54 en étant repliée radialement de part et d'autre des grilles 32, avec une pliure définie au niveau de la zone de contact avec l'extrémité aval 60a du cadre arrière 60 de support de grilles. En outre, lorsque la structure mobile 29 occupe sa position reculée d'inversion de poussée de la figure 16, la membrane d'obturation 58 se trouve également en appui contre cette extrémité aval 60a du cadre arrière 60, de la même manière qu'elle est également en contact avec l'extrémité amont 52a de la paroi 52 du capot mobile. D'ailleurs, ces extrémités 60a, 52a peuvent présenter un profil arrondi pour favoriser le glissement de la membrane 58 lors de son déploiement automatique observé durant le déplacement de la structure mobile 29. Dans ce mode de réalisation également, il est possible que la course de cette structure mobile 29 soit telle qu'il puisse être observé une rupture de contact entre la membrane 58 et l'extrémité 60a, selon le même principe que celui exemplifié sur la figure 3A portant sur le mode de réalisation précédent.

Dans tous les modes de réalisation préférés, la première solution consiste à accrocher l'extrémité 58b de la membrane 58 à des câbles 70 reliés à la paroi 18 (également dénommée IFS, de l'anglais « Inner Fixed Structure »), par une liaison qui peut avantageusement exercer une force de traction sur chaque câble 70 le ramenant vers cette paroi 18, par exemple au moyen d'une liaison élastique comme mentionné précédemment. Les câbles 70 eux-mêmes peuvent être élastiques, par exemple en utilisant des câbles en Kevlar^{®}, et ces mêmes câbles peuvent être mis en tension lors de la fermeture du capot coulissant 33. Des renforts peuvent être intégrés à la membrane 58 dans le prolongement de ces câbles 70, jusqu'aux points d'accroche externes avec le cadre arrière de support de grilles 60, ou la paroi externe 50 du capot coulissant 33.

Ces câbles 70 sont avantageusement positionnés radialement dans la veine en étant circonférentiellement espacés les uns des autres. En position de jet direct, ils tendent la membrane 58 entre son extrémité 58a et le bord d'attaque / l'extrémité amont 52a de la paroi 52 du capot. Lors du déploiement, quand le capot coulissant 33 recule, les câbles 70 viennent tirer la membrane 58 vers la veine secondaire de façon à ce qu'elle y prenne l'air et s'y déploie progressivement.

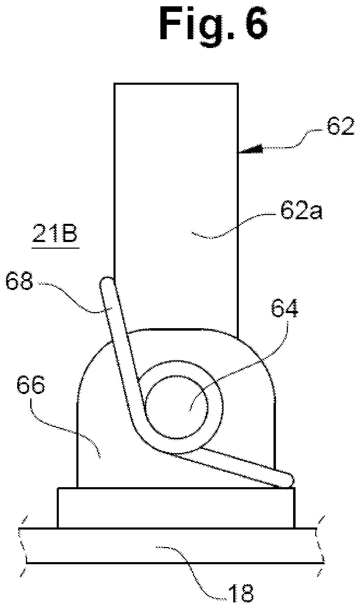

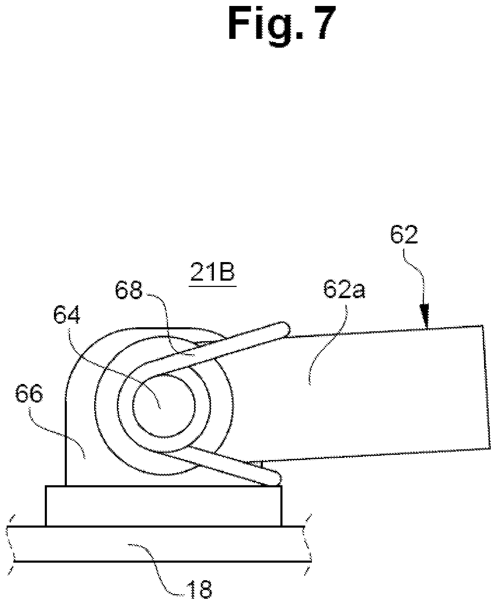

Selon le but recherché, les seconds moyens d'accrochage peuvent être constitués par des bielles 62, à la place des câbles cités précédemment. Une première extrémité 62a de chacune d'elles est montée sur la paroi 18, de préférence par l'intermédiaire d'une liaison pivot ou rotule 64 montrée plus en détail sur les figures 6 et 7. Cette liaison 64 peut être réalisée à l'aide d'une ferrure 66 fixée sur la paroi fixe 18 et coopérant avec la première extrémité de bielle 62a.

Les bielles 62 sont espacées circonférentiellement les unes des autres au sein de la veine secondaire 21B, et leur nombre peut par exemple varier de deux à dix.

Chaque bielle 62 est conçue pour se déplacer d'une position en saillie radialement dans la veine secondaire 21B, position montrée sur les figures 2, 4 et 6 et adoptée lorsque la structure mobile 29 occupe sa position avancée de poussée directe, à une position rabattue vers l'aval, montrée sur les figures 3, 5 et 7 et adoptée lorsque la structure mobile 29 occupe sa position reculée d'inversion de poussée. Dans la position en saillie, chaque bielle 62 peut adopter une orientation radiale ou sensiblement radiale en rapport à l'axe A1, tandis que dans la position rabattue, chaque bielle peut adopter une orientation axiale ou sensiblement axiale.

Des moyens élastiques, dits moyens élastiques de rappel 68, tendent à incliner chaque bielle 62 vers sa position rabattue / couchée de la figure 7, en particulier quand la bielle est dans sa position en saillie correspondant à la position de vol de l'inverseur. Ainsi, en début de déploiement de l'inverseur, chaque bielle 62 exerce sur la membrane 58 une poussée vers l'arrière et vers le bas qui la tire dans la veine de façon à ce que l'écoulement qui s'engouffre dans la cavité 54 en début de transit ne vienne pas coincer la membrane dans cette cavité 54 de capot de soufflante 33.

La seconde extrémité 62b de chaque bielle 62, opposée à la première extrémité 62a, peut être raccordée directement sur la seconde extrémité 58b de la membrane 58. Néanmoins, d'autres solutions préférentielles sont retenues, comme celles visant à intégrer des câbles ou des sangles de renforts au sein des seconds moyens d'accrochage.

Il est noté que les bielles 62 sont axialement positionnées pour que la trajectoire de leur extrémité 62b soit tangente ou sensiblement tangente à la surface intérieure du panneau acoustique 52 dans sa partie avant, ou pour que la trajectoire soit descendante dans la veine.

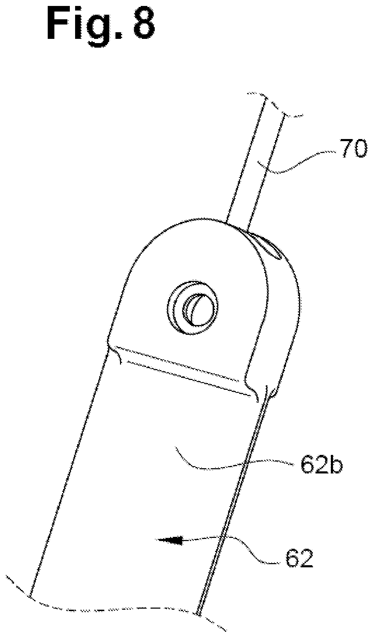

Dans le mode de réalisation représenté sur les figures 1 à 8, les câbles 70 (visibles sur les figures 3 et 8) coopèrent avec les bielles 62 en étant chacun fixé à la seconde extrémité 62b de l'une des bielles associée à ce câble. Alternativement, les câbles 70 pourraient traverser leurs bielles associées 62 pour être fixés sur la paroi 52 de délimitation radialement interne de la veine secondaire, par exemple via les ferrures 66.

A cet égard, il est noté que la longueur de câble est prévue pour permettre un jeu suffisant entre l'extrémité 62b de la bielle et le panneau 52, en particulier pour éviter les risques d'interférences mécaniques entre ces pièces lors de la phase de repli de l'inverseur.

De préférence, comme cela est le mieux visible sur la figure 5, les câbles 70 cheminent ensuite sur la membrane 58, sur laquelle ils sont fixés de manière conventionnelle pour renforcer la tenue mécanique de cette membrane. Ces câbles ou ces sangle intégrées 70 remplissent alors également une fonction d'armature pour la membrane 58, et ils sont préférentiellement espacés circonférentiellement les uns des autres, en étant orientés sensiblement radialement. Toujours de manière préférentielle, chaque câble 70 s'étend le long de la membrane 58 de sa seconde extrémité 58b jusqu'à sa première extrémité 58b, en allant éventuellement au-delà de cette première extrémité 58b comme cela sera décrit ci-après.

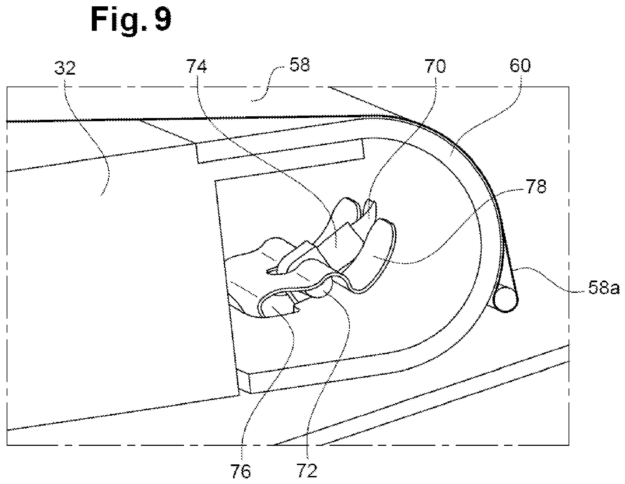

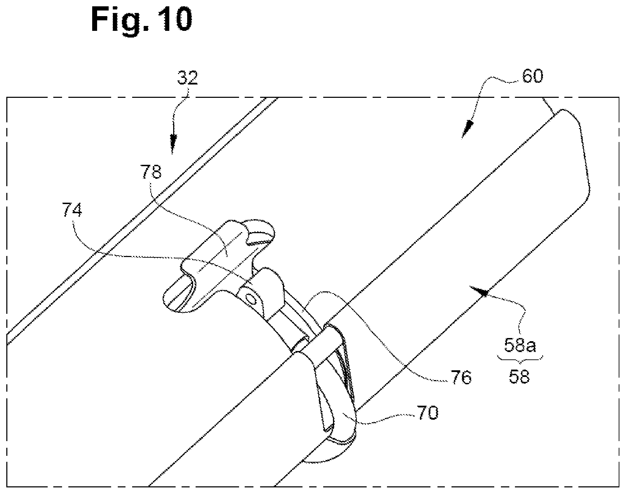

Les figures 9 et 10 représentent une réalisation préférée pour les premiers moyens d'accrochage, associés à la première extrémité 58a de la membrane d'obturation 58. Ils comprennent une pluralité de boutons 72 solidaires de la première extrémité 58a de la membrane 58, et en étant espacés circonférentiellement les uns des autres. Sur chacune des figures 9 et 10, seul l'un des boutons 72 est représenté. Le bouton 72 prend la forme d'un axe de faible longueur orienté circonférentiellement, et raccordé à l'un des câbles d'armature radiaux 70 précités via un organe de liaison 74. Le bouton 72 coopère avec une boutonnière 76 réalisée dans le cadre arrière de support de grilles 60. La boutonnière 76 correspond à une fente en forme générale de T à travers la paroi du cadre arrière de support 60, avec la tige du T orientée sensiblement axialement, et sa tête orientée sensiblement circonférentiellement. La tête du T permet l'introduction du bouton 72, tandis que la tige du T assure son maintien en configuration boutonnée représentée sur les figures 9 et 10. A cet égard, il est préférentiellement mis en œuvre un clip élastique de sécurité 78 coopérant à la fois avec la boutonnière 76 et avec le bouton 72, de manière à sécuriser la position de ce dernier dans la boutonnière, et éviter son extraction non-désirée en dehors de celle-ci.

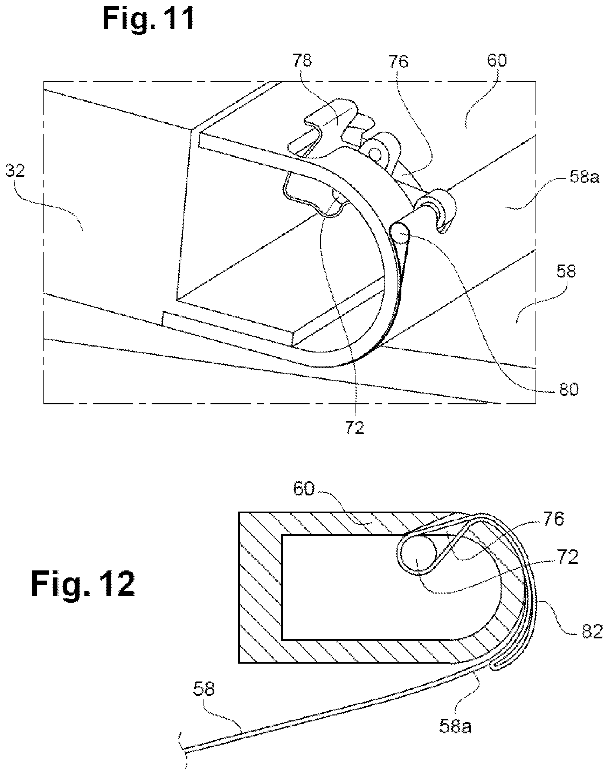

Dans ce mode de réalisation, la solidarisation du bouton 72 à la première extrémité 58a de la membrane d'obturation 58 s'effectue donc via son raccordement au câble d'armature radial 70 cheminant tout le long de la membrane jusqu'à l'une des bielles des seconds moyens de raccordement. D'autres réalisations sont néanmoins possibles. A titre d'exemple représenté sur la figure 11, un câble d'armature circonférentiel 80 peut être fixé sur la première extrémité 58a de la membrane, et chaque bouton 72 peut être raccordé sur ce même câble circonférentiel 80, toujours via la ferrure 76.

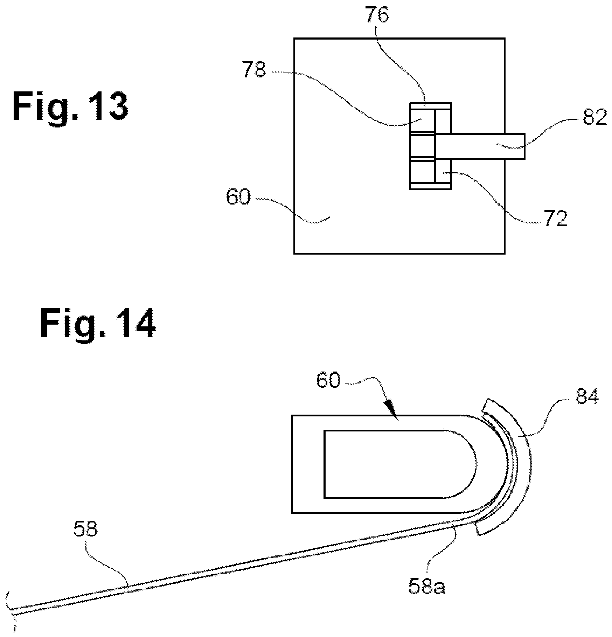

Selon un autre exemple représenté sur les figures 12 et 13, le bouton 72 peut être fixé sur une patte 82, elle-même fixée sur la première extrémité 58a de la membrane 58. La patte 82 peut ainsi longer et épouser l'extrémité arrière du cadre arrière de support de grilles 60, tout en étant raccordée d'une part au bouton 72, et d'autre part à la première extrémité 58a de la membrane.

Selon un autre mode de réalisation visible sur la figure 14, les premiers moyens d'accrochage comprennent une tôle 84 fixée sur et épousant l'extrémité arrière du cadre arrière de support des grilles 60. Les moyens de fixation employés pour le montage de cette tôle 84 peuvent être du type boulons ou rivets, ou d'autres moyens conventionnels. Cela permet d'enserrer la première extrémité 58a de la membrane d'obturation 58 entre ce cadre de support des grilles 60, et la tôle 84.

Des premiers moyens d'accrochage identiques ou similaires peuvent être adoptés pour le mode de réalisation des figures 15 et 16, visant à raccorder la membrane 58 sur l'extrémité amont 50a de la paroi 50 du capot.

A ce sujet, il est noté que pour des grilles 32 de longueur courante, le mode préféré d'accroche de l'extrémité externe 58a de la membrane 58 correspond à celui où cette extrémité 58a est fixée au cadre arrière de support de grilles 60.

Toutefois, dans le cas de grilles 32 plus courtes ou plus compactes, ou si la course du capot 33 lors du déploiement s'avère bien supérieure à la longueur des grilles 32, alors il peut être judicieux d'accrocher l'extrémité 58a non plus au cadre arrière de support 60, mais sur la paroi radialement externe 50 du capot, et encore plus précisément sur l'extrémité amont 50a de cette paroi, en forme de bord d'attaque 60a.

Comme indiqué précédemment, lors du déploiement, la membrane 58 coulissent non seulement sur l'extrémité amont 52a du panneau acoustique interne 52, mais également contre le cadre arrière de support de grilles 60, de forme arrondie afin de faciliter le glissement de la membrane 58 lors de ce déploiement.

Toutes les variantes citées ci-dessus, concernant la structure de la membrane 58, restent applicables à ce mode de réalisation représenté sur les figures 15 et 16, sur lequel seul le point d'accroche de l'extrémité de membrane 58a est modifié.

Par ailleurs, deux variantes sont possibles au sujet du positionnement de l'autre extrémité de membrane 58b, en position de jet direct.

Dans la première variante, l'extrémité 58b est située légèrement radialement vers l'intérieur par rapport au point de contact entre le bord de déviation 46B, et le bord d'attaque 52a du panneau acoustique 52. Selon une seconde variante, la membrane 58 est prise en sandwich entre le bord de déviation 46B et le bord d'attaque 52a du panneau acoustique 52.

Diverses modifications peuvent être apportées par l'homme du métier à l'invention qui vient d'être décrite, uniquement à titre d'exemples non limitatifs, et dont la portée est définie par les revendications annexées. Par exemple, l'inverseur de poussée 30 peut alternativement présenter une architecture en « C » ou en « O ».

## Revendications

1. Inverseur de poussée (30) pour ensemble propulsif d'aéronef, l'inverseur comprenant une structure fixe (31) équipée d'au moins une grille de déviation (32) ainsi que d'une paroi de délimitation radialement interne (18) d'une veine secondaire (21B) de l'ensemble propulsif destinée à être traversée par un flux secondaire (20B), l'inverseur comprenant également une structure mobile (29) comprenant au moins un capot d'inverseur (33) présentant un logement (54) ouvert vers l'amont et délimité entre une paroi radialement externe (50) et une paroi radialement interne (52) du capot d'inverseur (33), la structure mobile étant déplaçable en translation par rapport à la structure fixe selon un axe central longitudinal (A1) de l'inverseur, entre une position avancée de poussée directe et une position reculée d'inversion de poussée, la grille de déviation (32) étant agencée, en position avancée de poussée directe de la structure mobile, dans le logement (54) du capot d'inverseur en étant isolée de la veine secondaire par la paroi radialement interne (52) du capot d'inverseur (33), et, dans la position reculée d'inversion de poussée de la structure mobile (29), la paroi radialement interne reculée (52) du capot d'inverseur laissant apparaître en amont une ouverture de passage (56) de la veine secondaire (21B) vers la grille de déviation (32), l'inverseur de poussée comprenant également au moins une membrane d'obturation (58) conçue pour dévier au moins une partie du flux secondaire vers l'ouverture de passage (56) et la grille de déviation (32), lorsque la structure mobile (29) se trouve en position reculée d'inversion de poussée, **caractérisé en ce qu'**il comprend des premiers moyens d'accrochage (72, 76) reliant une première extrémité (58a) de la membrane d'obturation à un cadre arrière (60) de support de la grille de déviation (32) ou à la paroi radialement externe (50) du capot d'inverseur (33), ainsi que des seconds moyens d'accrochage (62, 70) reliant une seconde extrémité (58b) de la membrane d'obturation à la paroi de délimitation radialement interne (18) de la veine secondaire, au moins une partie de la membrane d'obturation (58) se trouvant agencée entre la grille de déviation (32) et la paroi radialement interne (52) du capot d'inverseur (33) lorsque la structure mobile occupe sa position avancée de poussée directe, et la membrane d'obturation (58) se trouvant en partie en appui contre une extrémité amont (52a) de la paroi radialement interne (52) du capot d'inverseur (33) ou en amont et à distance de cette extrémité amont (52a), lorsque la structure mobile (29) occupe sa position reculée d'inversion de poussée.

2. Inverseur de poussée selon la revendication 1, **caractérisé en ce que** les seconds moyens d'accrochage comprennent des bielles (62) dont une première extrémité (62a) de chacune d'elles est montée sur la paroi de délimitation radialement interne (18) de la veine secondaire (21B), de préférence par l'intermédiaire d'une liaison pivot (64) ou d'une liaison rotule.

3. Inverseur de poussée selon la revendication 2, **caractérisé en ce que** chaque bielle (62) est conçue pour se déplacer d'une position en saillie dans la veine secondaire (21B), adoptée lorsque la structure mobile (29) occupe sa position avancée de poussée directe, à une position rabattue vers l'aval, adoptée lorsque la structure mobile (29) occupe sa position reculée d'inversion de poussée, et **en ce que** des moyens élastiques (68) poussent chaque bielle (62) vers sa position rabattue.

4. Inverseur de poussée selon l'une quelconque des revendications précédentes, **caractérisé en ce que** les premiers moyens d'accrochage comprennent une pluralité de boutons (72) solidaires de la première extrémité (58a) de la membrane d'obturation (58), ainsi que des boutonnières (76) réalisées dans le cadre arrière (60) de support de la grille de déviation (32), un clip élastique de sécurité (78) étant préférentiellement associé à chaque bouton (72) pour sécuriser la position du bouton dans la boutonnière.

5. Inverseur de poussée selon la revendication 4, **caractérisé en ce que** les boutons (72) sont solidarisés à la première extrémité (58a) de la membrane d'obturation via un câble d'armature circonférentiel (80) fixé sur cette première extrémité (58a) de la membrane (58), ou via des câbles d'armature radiaux (70) fixés sur la membrane d'obturation (58), ou encore via des pattes (82) fixées sur la première extrémité (58a) de la membrane.

6. Inverseur de poussée selon l'une quelconque des revendications 1 à 3, **caractérisé en ce que** les premiers moyens d'accrochage comprennent une tôle (84) fixée sur le cadre arrière (60) de support de la grille de déviation (32), et enserrant la première extrémité (58a) de la membrane d'obturation (58) entre ce cadre de support (60) et la tôle (84).

7. Inverseur de poussée selon l'une quelconque des revendications précédentes, **caractérisé en ce que** lorsque la structure mobile (29) adopte sa position avancée de poussée directe, la seconde extrémité (58b) de la membrane d'obturation (58) est pincée entre l'extrémité amont (52a) de la paroi radialement interne (52) du capot d'inverseur (33), et un bord de déviation (46B) appartenant à la structure fixe (31) de l'inverseur.

8. Inverseur de poussée selon l'une quelconque des revendications précédentes, **caractérisé en ce que** les premiers moyens d'accrochage relient la première extrémité (58a) de la membrane d'obturation à une extrémité amont (50a) de la paroi radialement externe (50) du capot d'inverseur (33), et **en ce que** la membrane d'obturation (58) se trouve également en partie en appui contre une extrémité aval (60a) du cadre arrière (60) de support de la grille de déviation ou en aval et à distance de cette extrémité aval (60a), lorsque la structure mobile (29) occupe sa position reculée d'inversion de poussée.

9. Nacelle (3) pour ensemble propulsif d'aéronef, comprenant au moins un capot de soufflante (14), ainsi qu'un inverseur de poussée (30) selon l'une quelconque des revendications précédentes.

10. Ensemble propulsif (1) pour aéronef, comprenant une turbomachine (2) et une nacelle (3) selon la revendication précédente.

## Patentansprüche

1. Schubumrichter (30) für eine Flugzeugantriebseinheit, wobei der Umrichter eine feste Struktur (31) umfasst, die mit mindestens einem Umlenkgitter (32) sowie mit einer radial innereren Begrenzungswand (18) einer Sekundärleitung (21B) der Antriebseinheit ausgestattet ist, die von einem Sekundärstrom (20B) durchströmt werden soll, wobei der Umrichter auch eine bewegliche Struktur (29) umfasst, die mindestens eine Umrichterhaube (33) mit einem Gehäuse (54) aufweist, das stromaufwärts offen und zwischen einer radial äußeren Wand (50) und einer radial inneren Wand (52) der Umrichterhaube (33) begrenzt ist, wobei die bewegliche Struktur in Bezug auf die feste Struktur entlang einer Längsmittelachse (A1) des Umrichters zwischen einer vorgeschobenen Position des direkten Schubs und einer zurückgeschobenen Position der Schubumkehr in Translation beweglich ist, wobei das Umlenkgitter (32) in der vorgeschobenen Position des direkten Schubs der beweglichen Struktur in der Aufnahme (54) der Umrichterhaube angeordnet ist und durch die radial innere Wand (52) der Umrichterhaube (33) von der Sekundärleitung isoliert ist, und in der zurückgeschobenen Position der Schubumkehr der beweglichen Struktur (29) die radial innere zurückgeschobene Wand (52) der Umrichterhaube stromaufwärts eine Durchgangsöffnung (56) von der Sekundärleitung (21B) zum Umlenkgitter (32) freigibt, wobei der Schubumrichter auch mindestens eine Verschlussmembran (58) umfasst, die ausgebildet ist, um mindestens einen Teil des Sekundärstroms in Richtung der Durchgangsöffnung (56) und des Umlenkgitters (32) umzuleiten, wenn sich die bewegliche Struktur (29) in der zurückgeschobenen Position der Schubumkehr befindet, **dadurch gekennzeichnet, dass** er erste Einhängemittel (72, 76) umfasst, die ein erstes Ende (58a) der Verschlussmembran mit einem hinteren Stützrahmen (60) des Umlenkgitters (32) oder mit der radial äußeren Wand (50) der Umrichterhaube (33) verbinden, sowie zweite Einhängemittel (62, 70), die ein zweites Ende (58b) der Verschlussmembran mit der radial inneren Begrenzungswand (18) der Sekundärleitung verbinden, wobei mindestens ein Teil der Verschlussmembran (58), der sich zwischen dem Umlenkgitter (32) und der radial inneren Wand (52) der Umrichterhaube (33) befindet, wenn die bewegliche Struktur ihre vorgeschobenen Position des direkten Schubs einnimmt, und die Verschlussmembran (58) sich teilweise an einem vorgelagerten Ende (52a) der radial inneren Wand (52) der Umrichterhaube (33) anliegend oder vor und in einem Abstand zu diesem vorgelagerten Ende (52a) befindet, wenn die bewegliche Struktur (29) ihre zurückgeschobene Position der Schubumkehr einnimmt.

2. Schubumrichter nach Anspruch 1, **dadurch gekennzeichnet, dass** die zweiten Einhängemittel Schubstangen (62) umfassen, von denen jeweils ein erstes Ende (62a) an der radial inneren Begrenzungswand (18) der Sekundärleitung (21B) montiert ist, vorzugsweise über eine Drehgelenkverbindung (64) oder eine Kugelverbindung.

3. Schubumrichter nach Anspruch 2, **dadurch gekennzeichnet, dass** jede Schubstange (62) so ausgebildet ist, dass sie sich von einer vorstehenden Position in der Sekundärleitung (21B), die eingenommen wird, wenn die bewegliche Struktur (29) ihre vorgeschobene Position des direkten Schubs einnimmt, in eine nach unten geklappte Position, die eingenommen wird, wenn die bewegliche Struktur (29) ihre zurückgeschobene Position der Schubumkehr einnimmt, bewegt, und dass elastische Mittel (68) jede Schubstange (62) in ihre zurückgeklappte Position drücken.

4. Schubumrichter nach einem der vorhergehenden Ansprüche, **dadurch gekennzeichnet, dass** die ersten Einhängemittel eine Vielzahl von Knöpfen (72) umfassen, die mit dem ersten Ende (58a) der Verschlussmembran (58) verbunden sind, sowie Knopflöcher (76), die im hinteren Rahmen (60) zur Unterstützung des Umlenkgitters (32) ausgeführt sind, wobei vorzugsweise mit jedem Knopf (72) ein elastischer Sicherheitsclip (78) verbunden ist, um die Position des Knopfs im Knopfloch zu sichern.

5. Schubumrichter nach Anspruch 4, **dadurch gekennzeichnet, dass** die Knöpfe (72) über ein an diesem ersten Ende (58a) der Membran (58) befestigtes umlaufendes Ankerseil (80) oder über an der Verschlussmembran (58) befestigte radiale Ankerseile (70) oder noch über an dem ersten Ende (58a) der Membran befestigte Laschen (82) mit dem ersten Ende (58a) der Verschlussmembran verbunden sind.

6. Schubumrichter nach einem der Ansprüche 1 bis 3, **dadurch gekennzeichnet, dass** die ersten Einhängemittel ein Blech (84) umfassen, das am hinteren Stützrahmen (60) des Umlenkgitters (32) befestigt ist und das erste Ende (58a) der Verschlussmembran (58) zwischen diesem Tragrahmen (60) und dem Blech (84) umschließt.

7. Schubumrichter nach einem der vorhergehenden Ansprüche, **dadurch gekennzeichnet, dass** das zweite Ende (58b) der Verschlussmembran (58) zwischen dem vorgelagerten Ende (52a) der radial inneren Wand (52) der Umrichterhaube (33) und einer zu der festen Struktur (31) des Umrichters gehörenden Umlenkkante (46B) eingeklemmt ist, wenn die bewegliche Struktur (29) ihre vorgeschobene Position des direkten Schubs einnimmt.

8. Schubumrichter nach einem der vorhergehenden Ansprüche, **dadurch gekennzeichnet, dass** die ersten Einhängemittel das erste Ende (58a) der Verschlussmembran mit einem vorgelagerten Ende (50a) der radial äußeren Wand (50) der Umrichterhaube (33) verbinden, und dass die Verschlussmembran (58) auch teilweise an einem stromabwärts gelegenen Ende (60a) des hinteren Stützrahmens (60) des Umlenkgitters oder stromabwärts und von diesem stromabwärts gelegenen Ende (60a) entfernt anliegt, wenn die bewegliche Struktur (29) ihre zurückgeschobene Position der Schubumkehr einnimmt.

9. Gondel (3) für eine Flugzeugantriebseinheit, umfassend mindestens eine Gebläsehaube (14) sowie einen Schubumrichter (30) nach einem der vorhergehenden Ansprüche.

10. Triebwerk (1) eines Flugzeugs, umfassend eine Turbomaschine (2) und eine Gondel (3) nach dem vorhergehenden Anspruch.

## Claims

1. A thrust reverser (30) for an aircraft propulsion unit, the thrust reverser comprising a fixed structure (31) equipped with at least one cascade vane (32) as well as a radially internal delimiting wall (18) of a secondary flow path (21B) of the propulsion unit intended to be crossed by a secondary flow (20B), the thrust reverser also comprising a movable structure (29) comprising at least one thrust reverser cowl (33) having a housing (54) which is open upstream and delimited between a radially outer wall (50) and a radially inner wall (52) of the thrust reverser cowl (33), the movable structure being displaceable in translation relative to the fixed structure along a longitudinal central axis (A1) of the thrust reverser, between a forward direct thrust position and a retracted thrust reversal position, the cascade vane (32) being arranged, in the forward direct thrust position of the movable structure, in the housing (54) of the thrust reverser cowl being isolated from the secondary flow path by the radially inner wall (52) of the thrust reverser cowl (33), and, in the retracted thrust reversal position of the movable structure (29), the retracted radially inner wall (52) of the thrust reverser cowl revealing upstream an opening (56) for passage from the secondary flow path (21B) towards the cascade vane (32), the thrust reverser also comprising at least one sealing membrane (58) designed to divert at least one portion of the secondary flow towards the passage opening (56) and the cascade vane (32), when the movable structure (29) is in the retracted thrust reversal position,
**characterised in that** it comprises first hooking means (72, 76) connecting a first end (58a) of the sealing membrane to a rear frame (60) for supporting the cascade vane (32) or to the radially outer wall (50) of the thrust reverser cowl (33), as well as second hooking means (62, 70) connecting a second end (58b) of the sealing membrane to the radially internal delimiting wall (18) of the secondary flow path, at least one portion of the sealing membrane (58) being arranged between the cascade vane (32) and the radially inner wall (52) of the thrust reverser cowl (33) when the movable structure occupies its forward direct thrust position, and the sealing membrane (58) being partially bearing against an upstream end (52a) of the radially inner wall (52) of the thrust reverser cowl (33) or upstream and at a distance from this upstream end (52a), when the movable structure (29) occupies its retracted thrust reversal position.

2. The thrust reverser according to claim 1, **characterised in that** the second hooking means comprise connecting rods (62) of which a first end (62a) of each of them is mounted on the radially internal delimiting wall (18) of the secondary flow path (21B), preferably via a pivot connection (64) or a ball joint connection.

3. The thrust reverser according to claim 2, **characterised in that** each connecting rod (62) is designed to be displaced from a protruding position in the secondary flow path (21B), adopted when the movable structure (29) occupies its forward direct thrust position, to a downstream folded position, adopted when the movable structure (29) occupies its retracted thrust reversal position, and **in that** elastic means (68) push each connecting rod (62) towards its folded position.

4. The thrust reverser according to any one of the preceding claims, **characterised in that** the first hooking means comprise a plurality of buttons (72) secured to the first end (58a) of the sealing membrane (58), as well as buttonholes (76) made in the rear frame (60) for supporting the cascade vane (32), an elastic safety clip (78) being preferably associated with each button (72) to secure the position of the button in the buttonhole.

5. The thrust reverser according to claim 4, **characterised in that** the buttons (72) are secured to the first end (58a) of the sealing membrane via a circumferential reinforcement cable (80) fastened on this first end (58a) of the membrane (58), or via radial reinforcement cables (70) fastened on the sealing membrane (58), or even via tabs (82) fastened on the first end (58a) of the membrane.

6. The thrust reverser according to any one of claims 1 to 3, **characterised in that** the first hooking means comprise a sheet metal (84) fastened on the rear frame (60) for supporting the cascade vane (32), and enclosing the first end (58a) of the sealing membrane (58) between this support frame (60) and the sheet metal (84).

7. The thrust reverser according to any one of the preceding claims, **characterised in that** when the movable structure (29) adopts its forward direct thrust position, the second end (58b) of the sealing membrane (58) is pinched between the upstream end (52a) of the radially inner wall (52) of the thrust reverser cowl (33), and a deflection edge (46B) belonging to the fixed structure (31) of the thrust reverser.

8. The thrust reverser according to any one of the preceding claims, **characterised in that** the first hooking means connect the first end (58a) of the sealing membrane to an upstream end (50a) of the radially outer wall (50) of the thrust reverser cowl (33), and **in that** the sealing membrane (58) is also partially bearing against a downstream end (60a) of the rear frame (60) for supporting the cascade vane or downstream and at a distance from this downstream end (60a), when the movable structure (29) occupies its retracted thrust reversal position.

9. A nacelle (3) for an aircraft propulsion unit, comprising at least one fan cowl (14), as well as a thrust reverser (30) according to any one of the preceding claims.

10. A propulsion unit (1) for an aircraft, comprising a turbomachine (2) and a nacelle (3) according to the preceding claim.
